# EUROPEAN PATENT APPLICATION

(11) **EP 2 407 870 A1**
(43) Date of publication of application: **18.01.2012**
(21) Application number: 11150259.7
(22) Date of filing: 05.01.2011
(51) Int. Cl.: G06F 3/048, H04N 5/232, H04N 1/00, H04N 101/00

(54) **Camera focus and shutter control**

(30) Priority: 16.07.2010 US 365220 P
(71) Applicant: Research in Motion Limited, Waterloo, Ontario N2L 3W8 (CA)
(72) Inventor: D'souza, Stephen, Kanata Ontario K2K 3K2 (CA); Hardy, Michael Thomas, Waterloo Ontario N2L 3L3 (CA)
(74) Representative: Fennell, Gareth Charles

(57) **Abstract**

A touch screen on a camera is provided. The touch screen comprises a button, wherein removal of contact from the button by lifting contact from the touch screen causes a photograph to be taken, and wherein removal of contact from the button by maintaining contact with the touch screen while moving contact to a portion of the touch screen other than the button causes a photograph not to be taken.

## Description

### BACKGROUND

As used herein, the term "camera" will refer to any device capable of taking photographs, regardless of whether the device is a stand-alone camera or a multi-function device with photography capabilities, such as a smart phone, a tablet computer, or a similar device. Some cameras may include a touch screen, wherein physical contact with an area of the touch screen causes an action to occur. For example, an image of a shutter button might appear on the touch screen, and contact with the shutter button image might cause the camera to take a photograph. Some cameras with touch screen shutter buttons may also include traditional mechanical shutter buttons. However, unless a mechanical shutter button is explicitly mentioned herein, terms such as "button", "shutter button", and the like will refer herein only to touch screen shutter buttons. That is, a shutter button might be an image or other area on a touch screen that represents and/or promotes the action of taking a photograph. The image might be transparent so that other portions of the touch screen are visible behind the shutter button. Also, as used herein, terms such as "contact with the shutter button" and the like refer to physical contact with an image of a shutter button on a touch screen.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 illustrates a camera according to an implementation of the disclosure.

Figure 2 illustrates a mobile telecommunications device according to an implementation of the disclosure.

Figure 3 is a flowchart for a method for canceling an impending capture of a photograph, according to an implementation of the disclosure.

Figure 4 is a flowchart for actions that might be taken related to the possible capture of a photograph, according to an implementation of the disclosure.

Figure 5 illustrates a processor and related components suitable for implementing the several aspects of the present disclosure.

### DETAILED DESCRIPTION

It should be understood at the outset that although illustrative implementations of one or more aspects of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Some cameras might have an autofocus function whereby a user can take a simple action that causes the camera to automatically focus on the scene toward which the lens is pointed. For example, for cameras with mechanical shutter buttons, the mechanical shutter button can be partially depressed to activate the autofocus. The mechanical shutter button can then be fully depressed to cause the camera to take a photograph. For some cameras with touch screens, the entire screen can be mechanically depressed. An image of a shutter button on the touch screen might be lightly touched to activate the autofocus, and then the entire touch screen might be physically pressed downward to take a photograph. An autofocus action might be canceled and a photograph might not be taken if a mechanical shutter button is released without being fully depressed or if contact is removed from an image of a shutter button without depressing a touch screen.

For other types of touch screen cameras, the touch screen cannot be physically depressed. For these touch screen cameras, the shutter button can be activated in one of two ways in order to take a photograph. In one mode, a quick tap of the shutter button causes a photograph to be taken. In the other mode, contact with the shutter button can be made and held, and a photograph is taken when the shutter button is released. In either mode, the autofocus function and/or other functions might be activated when contact with the shutter button is initially made. Also, in either mode, the capture of the photograph occurs at the moment the user removes contact from the shutter button. That is, it is the physical lifting of a finger or thumb from the shutter button that causes the photograph to be taken.

In some cases, the user might touch and hold the shutter button on such a touch screen camera in order to activate the autofocus or some other photography-related function. The user might then decide that he or she does not wish to take a photograph. However, when the user removes contact from the shutter button, a photograph will be taken despite the user's desire not to take a photograph. There is no way for the user to avoid taking a photograph once contact with the shutter button has been made.

In an implementation, mechanisms and methods are provided whereby the taking of a photograph can be canceled after a button or other image on a touch screen has been contacted. More specifically, after contact has been made with a touch screen shutter button, a photograph is not taken if contact is maintained with the touch screen while contact is moved to a portion of the touch screen other than the shutter button. That is, if a user places a finger on the shutter button and then slides the finger from the shutter button to another portion of the touch screen without lifting the finger, a photograph is not taken. In some cases, the photograph is canceled as soon as the finger is moved off of the shutter button, and in other cases, the photograph is canceled when the finger is moved to another portion of the touch screen and then lifted from the touch screen. Any photography-related functions, such as autofocus, that were activated when the user touched the shutter button might be deactivated when the user slides the finger off of the shutter button or when the user slides the finger off of the shutter button and then lifts the finger.

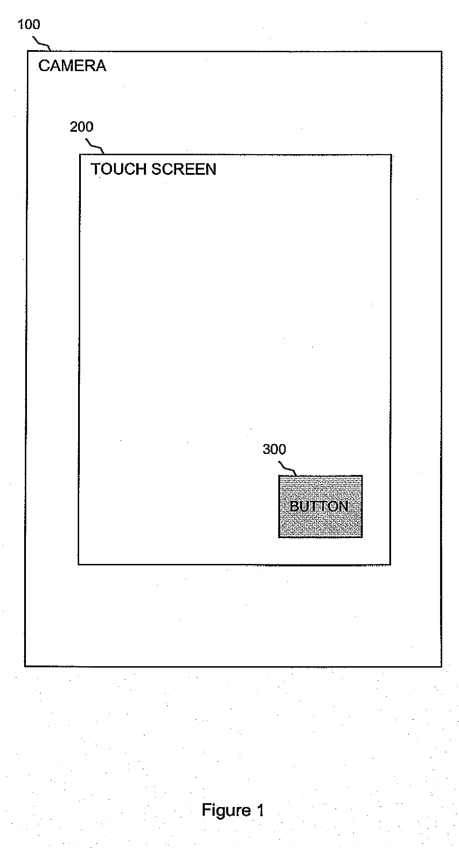

Figure 1 illustrates an implementation of a camera 100 capable of functioning in this manner. The camera 100 includes the lenses and other components necessary for taking photographs and, as mentioned previously, might be a stand-alone camera or a multi-function device with photography capabilities, such as a smart phone, a tablet computer, or a similar device. The camera 100 also includes a touch screen 200 on which an image of a shutter button 300 can appear. As described above, tapping the shutter button 300 or contacting the shutter button 300, maintaining contact, and then lifting contact from the shutter button 300 can cause a photograph to be taken. In addition, in an implementation, the taking of a photograph can be canceled after the shutter button 300 has been touched. That is, if a user places a finger or thumb on the shutter button 300 and then, without lifting the finger or thumb from the touch screen 200, slides the finger or thumb from the shutter button 300 to another portion of the touch screen 200, a picture is not taken.

In some implementations, the capture of the photograph is canceled at the time the finger is moved completely off of the shutter button 300. In other implementations, the capture of the photograph is canceled when the finger is lifted from the touch screen 200 after having been moved off of the shutter button 300. In the latter case, if the finger is slid off of the shutter button 300 and then slid back on to the shutter button 300 without being lifted from the touch screen 200, a photograph might be taken when the finger is lifted from the shutter button 300. In another alternative, a portion of the touch screen 200 might be labeled with the word "cancel" or some other appropriate terminology or symbol. The capture of the photograph might be canceled when the finger is slid from the shutter button 300 to the "cancel" area without being lifted from the touch screen 200, but the capture of the photograph might not be canceled when the finger is slid from the shutter button 300 to a portion of the touch screen 200 other than the "cancel" area without being lifted from the touch screen 200.

In an implementation, one or more photography-related functions, such as autofocus, that are activated when the shutter button 300 is contacted are deactivated when the finger or thumb is slid off of the shutter button 300. In some implementations, the deactivation occurs when all contact has been removed from the shutter button 300 but contact is still maintained with the touch screen 200. In other implementations, the deactivation occurs when the finger or thumb is lifted from the touch screen 200 after having been slid away from the shutter button 300. In still other implementations, the deactivation occurs when the finger or thumb is slid from the shutter button 300 to the "cancel" area.

As an example, a user who has observed a scene that he or she wishes to capture in a photograph might point the camera 100 at the scene and press a finger to the shutter button 300 in order to automatically focus on the scene. While the finger is still on the shutter button 300, the user might decide that he or she does not wish to take a picture of the scene. The user could then slide his or her finger away from the shutter button 300 such that contact is no longer made with any portion of the shutter button 300 but such that contact is maintained with the touch screen 200 throughout the sliding motion. When the user then lifts his or her finger from the touch screen 200, a photograph would not be taken and the autofocus and/or any other photography-related functions that had been activated by the pressing of the finger to the shutter button 300 would be deactivated.

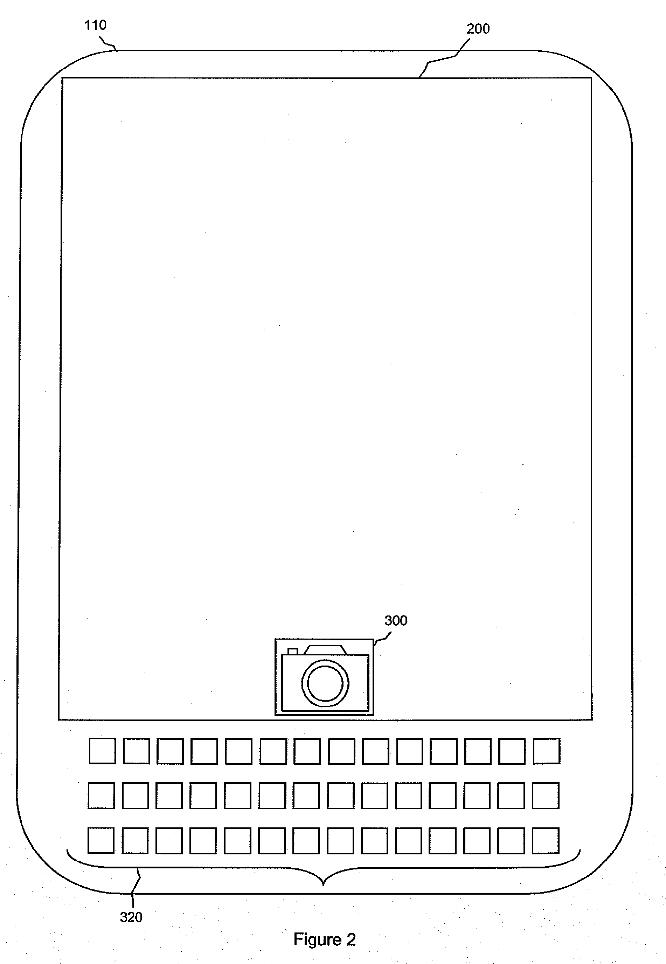

Figure 2 illustrates an implementation of a mobile telecommunications device 110. The mobile telecommunications device 110 might be a smart phone, a tablet computer, or a similar device that has wireless telecommunications capabilities as well as a built-in camera capable of functioning in the manner described herein. The mobile telecommunications device 110 includes a touch screen 200 for data display and a keypad 320 for data input and may include other components typically found on such devices. An image 300 of a shutter button appears on the touch screen 200. Tapping the shutter button image 300 or contacting the shutter button image 300, maintaining contact, and then lifting contact from the shutter button image 300 can cause a photograph to be taken. In an implementation, the taking of a photograph is canceled if a user places a finger or thumb on the shutter button image 300 and then, without lifting the finger or thumb from the touch screen 200, slides the finger or thumb off of the shutter button image 300 to another portion of the touch screen 200.

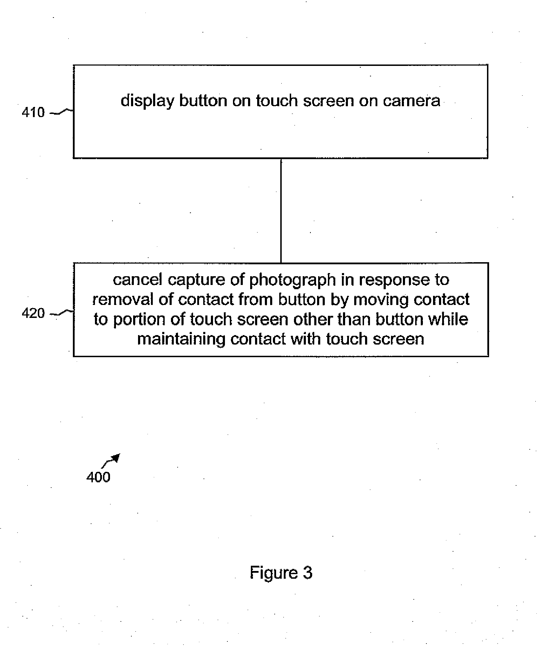

Figure 3 illustrates an implementation of a method 400 for canceling an impending capture of a photograph. At box 410, a button on a touch screen on a camera is displayed. At box 420, the capture of the photograph is canceled in response to removal of contact from the button by moving contact to a portion of the touch screen other than the button while maintaining contact with the touch screen.

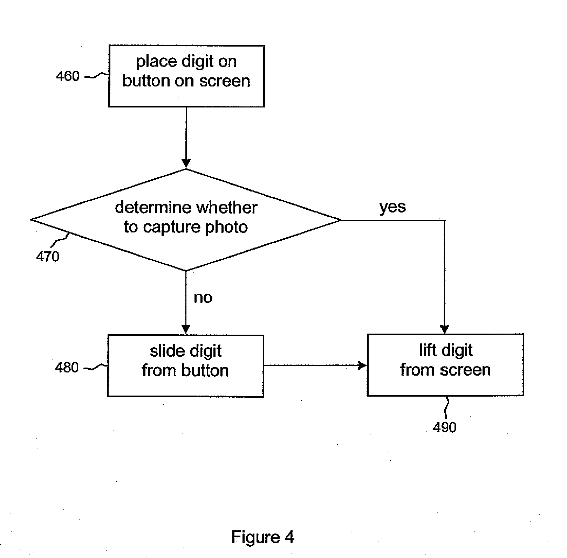

Figure 4 is a flowchart illustrating an implementation of actions that might be taken related to the possible capture of a photograph. At block 460, a camera user places a digit (i.e., a finger or thumb) on an image of a shutter button on a touch screen of the camera. At block 470, the user determines whether or not to capture a photograph with the camera. If the user decides not to capture a photograph, the user, at block 480, slides the digit away from the button to another portion of the touch screen without losing contact with the touch screen. The user then, at block 490, lifts the digit from the touch screen. If, at block 470, the user decides to capture a photograph, the user, at block 490, lifts the digit from the touch screen.

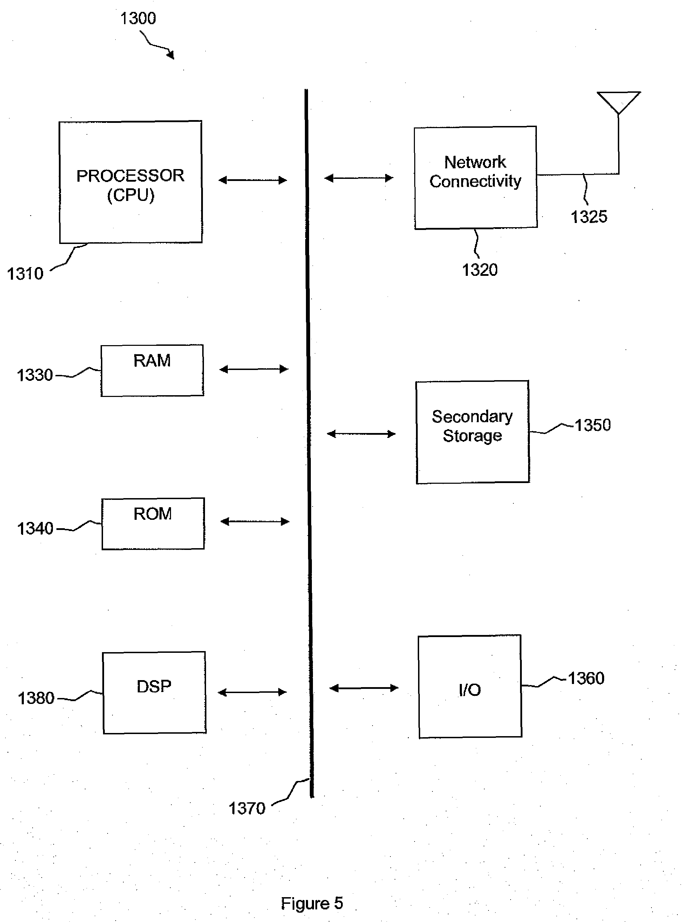

The shutter button 300 may include or be capable of communicating with appropriate software, firmware, hardware, or other components within the camera 100 such that the functionality described above is enabled. In addition, the camera 100 might include a processing component that is capable of executing instructions related to the actions described above. Figure 5 illustrates an example of a system 1300 that includes a processing component 1310 suitable for implementing one or more aspects disclosed herein. In addition to the processor 1310 (which may be referred to as a central processor unit or CPU), the system 1300 might include network connectivity devices 1320, random access memory (RAM) 1330, read only memory (ROM) 1340, secondary storage 1350, and input/output (I/O) devices 1360. These components might communicate with one another via a bus 1370. In some cases, some of these components may not be present or may be combined in various combinations with one another or with other components not shown. These components might be located in a single physical entity or in more than one physical entity. Any actions described herein as being taken by the processor 1310 might be taken by the processor 1310 alone or by the processor 1310 in conjunction with one or more components shown or not shown in the drawing, such as a digital signal processor (DSP) 1380. Although the DSP 1380 is shown as a separate component, the DSP 1380 might be incorporated into the processor 1310.

The processor 1310 executes instructions, codes, computer programs, or scripts that it might access from the network connectivity devices 1320, RAM 1330, ROM 1340, or secondary storage 1350 (which might include various disk-based systems such as hard disk, floppy disk, or optical disk). While only one CPU 1310 is shown, multiple processors may be present. Thus, while instructions may be discussed as being executed by a processor, the instructions may be executed simultaneously, serially, or otherwise by one or multiple processors. The processor 1310 may be implemented as one or more CPU chips.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, digital subscriber line (xDSL) devices, data over cable service interface specification (DOCSIS) modems, and/or other well-known devices for connecting to networks. These network connectivity devices 1320 may enable the processor 1310 to communicate with the Internet or one or more telecommunications networks or other networks from which the processor 1310 might receive information or to which the processor 1310 might output information.

The network connectivity devices 1320 might also include one or more transceiver components 1325 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 1325 might include separate receiving and transmitting units or a single transceiver. Information transmitted or received by the transceiver component 1325 may include data that has been processed by the processor 1310 or instructions that are to be executed by processor 1310. The data may be ordered according to different sequences as may be desirable for either processing or generating the data or transmitting or receiving the data. The baseband signal, the signal embedded in the carrier wave, or other types of signals currently used or hereafter developed may be referred to as the transmission medium and may be generated according to several methods well known to one skilled in the art.

The RAM 1330 might be used to store volatile data and perhaps to store instructions that are executed by the processor 1310. The ROM 1340 is a non-volatile memory device that typically has a smaller memory capacity than the memory capacity of the secondary storage 1350. ROM 1340 might be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and might be used for non-volatile storage of data or as an over-flow data storage device if RAM 1330 is not large enough to hold all working data. Secondary storage 1350 may be used to store programs that are loaded into RAM 1330 when such programs are selected for execution.

The I/O devices 1360 may include liquid crystal displays (LCDs), touch screen displays, keyboards, keypads, switches, dials, mice, track balls, voice recognizers, card readers, paper tape readers, printers, video monitors, or other well-known input/output devices. Also, the transceiver 1325 might be considered to be a component of the 1/0 devices 1360 instead of or in addition to being a component of the network connectivity devices 1320.

In an implementation, a camera is provided. The camera comprises a touch screen that displays a button, wherein removal of contact from the button by lifting contact from the touch screen causes a photograph to be taken, and wherein removal of contact from the button by maintaining contact with the touch screen while moving contact to a portion of the touch screen other than the button causes a photograph not to be taken.

In another implementation, a touch screen on a camera is provided. The touch screen comprises a button, wherein removal of contact from the button by lifting contact from the touch screen causes a photograph to be taken, and wherein removal of contact from the button by maintaining contact with the touch screen while moving contact to a portion of the touch screen other than the button causes a photograph not to be taken.

In another implementation, a method is provided for canceling an impending capture of a photograph. The method comprises displaying a button on a touch screen on a camera. The method further comprises canceling the capture of the photograph in response to removal of contact from the button by moving contact to a portion of the touch screen other than the button while maintaining contact with the touch screen.

In another implementation, a mobile telecommunications device is provided. The mobile telecommunications device includes a camera and a touch screen. The touch screen displays a button, wherein removal of contact from the button by lifting contact from the touch screen causes the camera to take a photograph, and wherein removal of contact from the button by maintaining contact with the touch screen while moving contact to a portion of the touch screen other than the button causes the camera to not take a photograph.

While several implementations have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various implementations as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A camera, comprising:
a touch screen that displays a button, wherein removal of contact from the button by lifting contact from the touch screen causes a photograph to be taken, and wherein removal of contact from the button by maintaining contact with the touch screen while moving contact to a portion of the touch screen other than the button causes a photograph not to be taken.

2. A touch screen on a camera, comprising:
a button, wherein removal of contact from the button by lifting contact from the touch screen causes a photograph to be taken, and wherein removal of contact from the button by maintaining contact with the touch screen while moving contact to a portion of the touch screen other than the button causes a photograph not to be taken.

3. A method for canceling an impending capture of a photograph, comprising:
displaying a button on a touch screen on a camera; and
not capturing the photograph in response to removal of contact from the button by moving contact to a portion of the touch screen other than the button while maintaining contact with the touch screen.

4. A mobile telecommunications device, comprising:
a camera; and
a touch screen that displays a button, wherein removal of contact from the button by lifting contact from the touch screen causes the camera to take a photograph, and wherein removal of contact from the button by maintaining contact with the touch screen while moving contact to a portion of the touch screen other than the button causes the camera to not take a photograph.

5. The camera, touch screen, method, or mobile telecommunications device of claims 1 through 4, wherein the taking of the photograph is canceled when contact is moved to the portion of the touch screen other than the button.

6. The camera, touch screen, method, or mobile telecommunications device of claims 1 through 4, wherein the taking of the photograph is canceled when contact is lifted from the touch screen after having been moved to the portion of the touch screen other than the button.

7. The camera, touch screen, method, or mobile telecommunications device of claims 1 through 4, wherein at least one photography-related function is activated by contact with the button and is deactivated when the photograph is not taken.

8. The camera, touch screen, method, or mobile telecommunications device of claim 7, wherein the at least one photography-related function is an autofocus function.
